# EUROPEAN PATENT SPECIFICATION

(11) **EP 1 588 886 B1**
(45) Date of publication and mention of the grant of the patent: **20.10.2010**
(21) Application number: 04252399.3
(22) Date of filing: 23.04.2004
(51) Int. Cl.: B60W 20/00

(54) **Series and parallel combined dual power drive system**
Duales Antriebssystem mit kombiniertem seriellen und parallelen Antriebsstrang
Système d'entraînement dual avec une chaine cinematique combiné en série et en parallèle

(43) Date of publication of application: 26.10.2005
(73) Proprietor: Yang, Tai-Her, Si-Hu Town, Dzan-Hwa (TW)
(72) Inventor: Yang, Tai-Her, Si-Hu Town, Dzan-Hwa (TW)
(74) Representative: Pratt, David Martin

(56) References cited:
- EP-A- 1 316 458
- FR-A- 2 809 352
- GB-A- 2 374 844
- US-A1- 2002 179 349
- US-A1- 2003 145 582
- US-B1- 6 276 472

## Description

### BACKGROUND OF THE INVENTION

### (a) Field of the Invention

The present invention is related to a series and parallel combined dual power drive system, and more particularly, to one that allows load driven at high efficiency and high power by an engine, with lighter load to be driven by series drive system at low rpm and low power to effectively eliminate low efficiency and high pollution flaws observed with the engine driving at low power and low rpm.

### (b) Description of the Prior Art:

Conventionally, single power system is used in a sea craft or aircraft. In recent years, dual power drive system has attracted significant R&D inputs, particularly in the areas of a motor drive system containing internal combustion engine drive and battery power driven at the same time, for energy saving and pollution control. Dual power drive systems already having been developed include:
1. Series drive system: an engine is used to drive a generator, the generator in turn drives a motor to drive a load, the system is found with defective of excessively wild difference in efficiency of various full load rates;
2. Energy storage type series drive system: an engine is used to drive a generator, the generator in turn drives a motor to drive a load; part of the electric energy from the generator at light load is inputted into a battery for storage, and the stored electric energy is used to drive the motor to drive a load when the engine stops; and
3. Parallel drive system: an engine is used to directly drive a load while a motor is driven to charge a battery at light load, so that once the engine stops, the electric energy stored in the battery is used to drive the motor to drive a load while in case of a heavy load, the load is driven by the motor driven simultaneously by the engine and the battery; this type of system is found with defective that a battery having sufficient capacity for storage of electric energy is required.

The operational principles of the series hybrid, the parallel hybrid and their combined arrangements the switching hybrid and the power-split hybrid propulsions systems, are compared and described in document EP 1316458.

### SUMMARY OF THE INVENTION

The invention is precisely defined in claim 1. The dependent claims recite advantageous embodiments of the invention.

### BRIEF DESCRIPTION OF THE DRAWINGS

Fig. 1 is a block chart of a preferred embodiment of the present invention.
Fig. 2 is another block chart of the preferred embodiment of the present invention.

### DETAILED DESCRIPTION OF THE PREFERRED EMBODIMENTS

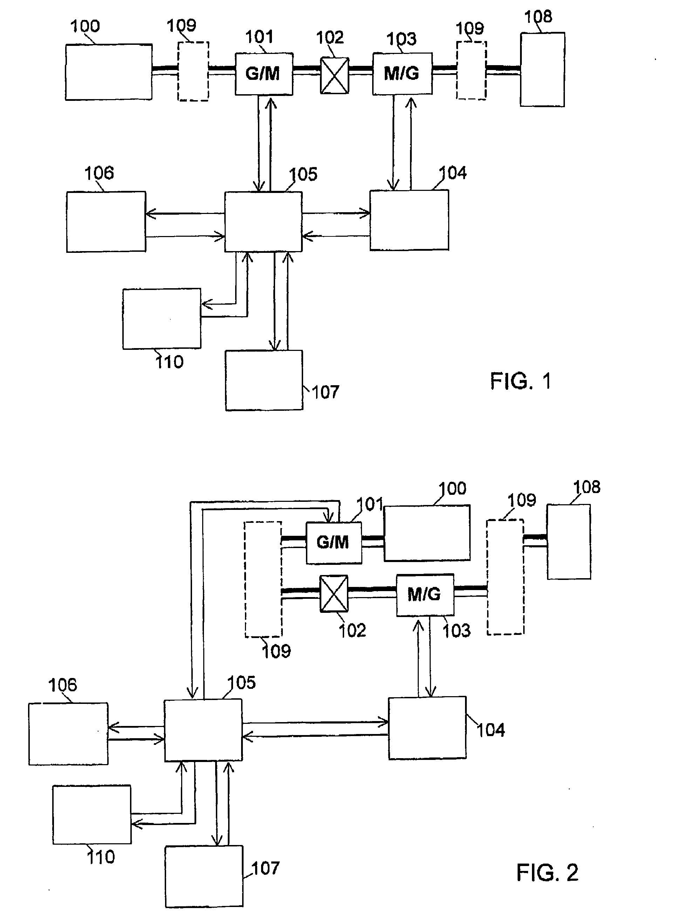

Referring to Fig. 1 for a block chart, wherein, a series and parallel combined dual power drive system of the present invention having a shaft from a first electric engineering unit and another shaft from a second electric engineering unit in series configuration, is essentially comprised of:
an engine set 100: relates to any type of internal combustion engine of the prior art;
the first electric engineering unit 101: comprised of an AC, or DC, brush or brushless rotary mechanism that functions as a generator, or can be converted into functioning as a motor or a generator;
a clutch 102: Related to one controlled by manual, mechanical force, air pressure, hydraulic flow, or electromagnetic force to transmit or to interrupt transmission of rotary mechanical kinetic;
the second electric engineering unit 103: comprised of an AC, or DC, brush or brushless rotary mechanism that functions as a motor, or can be converted into functioning as a motor or a generator;
a control unit 104 for the second electric engineering unit functioning as a motor drive: provided to control the first electric engineering unit 101 functioning as a generator, or to control an energy storage battery set 106 for controlling the revolving direction, rpm, torque and amperage of the second electric engineering unit 103 functioning as a motor;
a central control unit 105: comprised of solid-state, or electromechanical device, or chip and related software for being subject to the control by a manual control interface 107 to control operation of the series and parallel combined dual power drive system, the control unit 104 for the second electric engineering unit functioning as a motor, and feedback monitor and coordinated interaction among all units in the system;
an activating battery 110: comprised of a rechargeable battery of the prior art that is used to activate the engine set 100, or supply power to peripheral equipment;
the manual control interface 107: comprised of solid-state, or electromechanical device, or chip and related software to receive inputs of manual control to control the operation of the series and parallel combined dual power drive system;
a load 108: related to the load receiving inputs of rotary mechanical kinetic as required by a land, surface or air craft and industrial equipment; and
a transmission unit 109: comprised of any type of automatic, semi-automatic or manual transmission unit to be provided between the shaft of the engine set 100 and that of the first electric engineering unit 101, or between the shaft of the first electric engineering unit 101 and the input of the clutch 102, or between the output of the clutch 102 and the shaft of the second electric engineering unit 103, or between the shaft of the second electric engineering unit 103 and the load 108.

The serial and parallel combined dual power drive system provides its primary functions including but not limited to the followings:
Output from the engine set 100 drives the first electric engineering unit 101 functioning as a generator; the clutch 102 is provided between the shaft from the generator comprised of the first electric engineering unit 101 and the shaft of the motor comprised of the second electric engineering unit 103; output from the second electric engineering unit 103 functioning as the motor drives the load 108; the clutch 102 is not copulated when the load 108 is in state of a light load; output from the engine set 100 at low rpm drives the first electric engineering unit 101 functioning as the generator to produce electricity; then the electricity produced by the generator comprised of the first electric engineering unit 101 drives the motor comprised of the second electric engineering unit 103 and further to drive the load 108 in a status wherein the nature of the operation of the system is of a series drive system; and
the clutch 102 is closed in the event that the load 108 relates to a heavy load, and the load 108 is driven by the kinetic outputted from the engine set 100.

Furthermore, the series and parallel combined dual power drive system provides its secondary functions including but not limited to the following optional functions that may be or may not be required:
the clutch 102 is not copulated, instead, the generator comprised of the first electric engineering unit 101 is converted into functioning as a motor and is driven by the electricity supplied by the activating battery 110 to activate the revolution by the engine set 100;
the clutch 102 is not closed, instead, the motor comprised of the second electric engineering unit 103 revolves in the opposite direction to exercise reverse for the craft; and
the clutch 102 is closed, and the load 108 is driven by the engine set 100 to exercise the reverse for the craft.

On considerations of the urban environment, the demands of power drive when the engine fails, and the demand of energy storage for braking by regeneration kinetic, an energy storage battery set 106 may be added to the series and parallel combined dual power drive system for the energy storage battery set 106 to be recharged by the electricity generated by the first electric engineering unit 101 operating as a generator as driven by the power from the engine set 100, including that
(1) when the system is in series operation and the load 108 is related to a light load, also the first electric engineering unit 101 operates as a generator, the electricity generated is supplied to drive the second electric engineering unit 103 functioning as a motor to drive the load, and certain portion of the electricity is supplied to recharge the energy storage battery set 106 for the engine set 100 is capable of operating in a work range with higher energy efficiency;
(2) when the load 108 is directly driven by the power from the engine set 100, the first electric engineering unit 101 as drive operates as a generator to deliver certain portion of its electricity to recharge the energy storage battery set 106 so that the engine set 100 is capable of operating in a work range with higher energy efficiency;
(3) the electricity outputted from the generator comprised of the first electric engineering unit 101 as driven by the engine set 100 is used to recharge the energy storage battery set 106; and
(4) while exercising the braking, the energy storage battery set 106 is recharged by either or both of the first electric engineering unit 101 and the second engineering unit 103 functioning as the generator, or an electricity consumption load is added to provide regeneration kinetic feedback to the braking.

Output of electricity from the energy storage battery set 106 is used for the following purposes:
(1) to replace as an alternative the activating battery 110 to drive the first electric engineering unit 101 to function as a motor for activating the engine set 100;
(2) to drive the second electric engineering unit 103 to function as a drive motor to drive the load 108;
(3) to supply power to other loads;
(4) to drive by using the electricity from the energy storage battery set 106 the first electric engineering unit 101, or the second electric engineering unit 103 to function as a motor to support the engine set 100 jointly in driving the load 108; or
(5) to drive by using the electricity from the energy storage battery set 106 the first electric engineering unit 101, and the second electric engineering unit 103 to function each as a motor to support the engine set 100 jointly in driving the load 108.

Now referring to Fig. 2 for a block chart of the preferred embodiment of the present invention, the shaft of the engine set and that of the second electric engineering unit indicates a parallel structure.

The series and parallel combined dual power drive system for providing the combined operation of a series drive system and a parallel drive system to eliminate flaws of low efficiency and high pollution observed in the prior art by having its operation of the parallel drive system to allow the engine power drive a load at high power and high efficiency with an optional storage battery, and having the engine set 100 to drive the first electric engineering unit 101 functioning as a generator to output electricity for driving the second electric engineering unit 103 to function as a motor to drive a lighter load 108 at low power and low rpm, is innovative with precise functions, and this application is duly filed accordingly.

## Claims

1. A series and parallel combined dual power drive system comprising:
an engine set (100);
a first electric engineering unit (101) that functions as a generator, or can be converted so as to function as a motor or a generator;
a second electric engineering unit (103) that functions as a motor, or can be converted so as to function as a motor or a generator, the first and second electric engineering units being coaxial;
a clutch (102) positioned between the first and second electric engineering units for transmitting or interrupting transmission of rotary kinetic energy;
a control unit (104) for controlling the first electric engineering unit to function as a generator, or for controlling the second electric engineering unit to function as a motor;
a central control unit (105) subject to control by a manual control interface (107) for controlling operation of the series and parallel combined dual power drive system, and for controlling the control unit (104) when the second electric engineering unit functions as a motor, and for providing feedback monitoring and coordinated interaction among all units in the system;
an activating battery (110) for activating the engine set or supplying power to peripheral equipment;
a load (108); and a transmission unit (109) provided between an output shaft of the engine set and an input shaft of the first electric engineering unit, or between an output shaft of the first electric engineering unit and an input of the clutch, or between the output of the clutch and an input shaft of the second electric engineering unit, or between the output shaft of the second electric engineering unit and the load;
the arrangement being such that, when the load is a heavy load the clutch is engaged and the load is driven by the engine set; and, when the load is a light load, output from the second electric engineering unit functioning as a motor drives the load.

2. A system as claimed in claim 1, further comprising an energy storage battery (106), and wherein the arrangement is such that the output from the engine set (100) drives the first electric engineering unit (101) functioning as a generator to produce electricity to charge the energy storage battery (106).

3. A system as claimed in claim 1 or claim 2, whose primary functions include :
the output from the engine set (100) drives the first electric engineering unit (101) functioning as a generator;
the clutch (102) is provided between the output shaft of the first electric engineering unit (101) and the input shaft of the second electric engineering unit (103);
the output from the second electric engineering unit (103) functioning as a motor drives the load (108);
the clutch (102) is not engaged when the load (108) is a light load;
the output from the engine set (100) at low rpm drives the first electric engineering unit (101) functioning as a generator to produce electricity;
then the electricity produced by the generator constituted by the first electric engineering unit (101) drives the motor constituted by the second electric engineering unit (103), and further drives the load (108) when the system is a series drive system; and
the clutch (102) is closed in the event that the load (108) is a heavy load, and the load (108) is driven by the kinetic energy outputted by the engine set (100).

4. A system as claimed in claim 1 or claim 2, whose secondary functions include:
when the clutch (102) is not engaged, the generator constituted by the first electric engineering unit (101) is converted to function as a motor, and is driven by the electricity supplied by the activating battery (110) to activate the engine set (100), and the motor constituted by the second electric engineering unit (103) revolves in the opposite direction to exercise reverse drive to the load (108); and
when the clutch (102) is engaged, the load (108) is driven by the engine set (100) to exercise reverse drive to the load.

5. A system as claimed in claim 2, wherein, the arrangement is such that:
(1) when the system is in series operation and the load (108) is a light load, the first electric engineering unit (101) operates as a generator, the electricity generated is supplied to drive the second electric engineering unit (103) functioning as a motor to drive the load (108), and a certain portion of the electricity is supplied to recharge the energy storage battery set (106) so that the engine set (100) can operate in a work range with higher energy efficiency;
(2) when the load (108) is directly driven by the engine set (100), the first electric engineering unit (101) operates as a generator to deliver a certain portion of its electricity to recharge the energy storage battery (106), so that the engine set (100) can operatine in a work range with higher energy efficiency;
(3) the electricity outputted by the generator constituted by the first electric engineering unit (101) when driven by the engine set (100) is used to recharge the energy storage battery (106); and
(4) when exercising the braking, the energy storage battery (106) is recharged by either or both of the first electric engineering unit (101) and the second engineering unit (103) functioning as a generator, or an electricity consumption load is added to provide regeneration kinetic energy feedback to the braking.

6. A system as claimed in claim 5, wherein, the output of electricity from the energy storage battery (106) is used for the following purposes:
(1) to provide an alternative the activating battery (110) to drive the first electric engineering unit (101) to function as a motor for activating the engine set (100);
(2) to drive the second electric engineering unit (103) to function as a motor to drive the load (108);
(3) to supply power to other loads;
(4) to drive, by using the electricity from the energy storage battery(106), the first electric engineering unit (101), or the second electric engineering unit (103) to function as a motor to support the engine set (100) jointly in driving the load (108); or
(5) to drive, by using the electricity from the energy storage battery(106), the first electric engineering unit (101) and the second electric engineering unit (103) each to function as a motor to support the engine set (100) jointly in driving the load (108).

## Patentansprüche

1. Serielles und paralleles zusammengefasstes duales Kraftantriebssystem mit:
einem Motorsatz (100);
einer ersten Elektrotechnikeinheit (101), die als ein Generator arbeitet oder umgewandelt werden kann, als ein Motor oder ein Generator zu arbeiten;
einer zweiten Elektrotechnikeinheit (103), die als ein Motor arbeitet, oder umgewandelt werden kann, als ein Motor oder ein Generator zu arbeiten, wobei die ersten und zweiten Elektrotechnikeinheiten koaxial sind;
einer Kupplung (102), die zwischen den ersten und zweiten Elektrotechnikeinheiten zum Übertragen oder Unterbrechen der Übertragung rotatorischer kinetischer Energie angeordnet ist;
einer Steuereinheit (104) zum Steuern der ersten Elektrotechnikeinheit, als ein Generator zu arbeiten, oder zum Steuern der zweiten Elektrotechnikeinheit, als ein Motor zu arbeiten;
einer zentralen Steuereinheit (105), die einer manuellen Steuerungsschnittstelle (107) unterstellt ist zum Steuern des Betriebs des seriellen und parallelen zusammengefassten dualen Kraftantriebssystems und zum Steuern der Steuereinheit (104), wenn die zweite Elektrotechnikeinheit als ein Motor arbeitet und zum Bereitstellen einer Rückführ-Überwachung und eines koordinierten Zusammenspiels aller Einheiten in dem System;
einer Aktivierungsbatterie (110) zum Aktivieren des Motorsatzes oder zur Versorgung von Peripheriegeräten;
einer Last (108); und einer Getriebeeinheit (109), die zwischen einer Abtriebswelle des Motorsatzes und einer Antriebswelle der ersten Elektrotechnikeinheit oder zwischen einer Abtriebswelle der ersten Elektrotechnikeinheit und einer Antriebswelle der Kupplung oder zwischen der Abtriebswelle der Kupplung und der Antriebswelle der zweiten Elektrotechnikeinheit oder zwischen der Abtriebswelle der zweiten Elektrotechnikeinheit und der Last vorgesehen ist;
wobei die Anordnung so ist, dass wenn die Last eine schwere Last ist, sich die Kupplung im Eingriff befindet und die Last von dem Motorsatz angetrieben wird; und wenn die Last eine leichte Last ist, die abgegebene Leistung der zweiten Elektrotechnikeinheit, die als ein Motor arbeitet, die Last antreibt.

2. System nach Anspruch 1, das weiterhin eine Energiespeicherbatterie (106) aufweist und bei dem die Anordnung so ist, dass die abgegebene Leistung von dem Motorsatz (100) die erste Elektrotechnikeinheit (101) antreibt, die als ein Generator arbeitet, um elektrischen Strom zu erzeugen, um die Energiespeicherbatterie (106) zu laden.

3. System nach Anspruch 1 oder Anspruch 2, dessen Primärfunktionen umfassen:
die abgegebene Leistung von dem Motorsatz (100) treibt die erste Elektrotechnikeinheit (101) an, die als ein Generator arbeitet;
die Kupplung (102) ist zwischen der Abtriebswelle der ersten Elektrotechnikeinheit (101) und der Antriebswelle der zweiten Elektrotechnikeinheit (103) vorgesehen;
wobei die abgegebene Leistung der ersten Elektrotechnikeinheit (103), die als ein Motor arbeitet, die Last (108) antreibt;
die Kupplung (102) sich nicht im Eingriff befindet, wenn die Last (108) eine leichte Last ist;
die abgegebene Leistung von dem Motorsatz (100) bei niedrigen Drehzahlen die erste Elektrotechnikeinheit (101) antreibt, die als ein Generator arbeitet, um Strom zu erzeugen;
dann die Elektrizität, die von dem Generator verkörpert durch die erste Elektrotechnikeinheit (101) den Motor verkörpert durch die zweite Elektrotechnikeinheit (103) antreibt, und weiterhin die Last (108) antreibt, wenn das System ein serielles Antriebssystem ist; und
die Kupplung (102) in dem Fall geschlossen ist, dass die Last (108) eine schwere Last ist und die Last (108) von der kinetischen Energie angetrieben wird, die von dem Motorsatz (100) abgegeben wird.

4. System nach Anspruch 1 oder Anspruch 2, dessen Sekundärfunktionen umfassen:
wenn die Kupplung (102) sich nicht im Eingriff befindet, der Generator verkörpert durch die erste Elektrotechnikeinheit (101) umgestellt wird, als ein Motor zu arbeiten, und von dem elektrischen Strom angetrieben wird, der von der Aktivierungsbatterie (110) bereitgestellt wird, um den Motorsatz (100) zu aktivieren, und der Motor verkörpert durch die zweite Elektrotechnikeinheit (103) sich in der umgekehrten Richtung dreht, um einen Rückwärtsantrieb auf die Last (108) auszuüben; und
wenn die Kupplung (102) sich im Eingriff befindet, die Last (108) von dem Motorsatz (100) angetrieben wird, um einen Rückwärtsantrieb auf die Last auszuüben.

5. System nach Anspruch 2, bei dem die Anordnung so ist, dass:
1) wenn sich das System im seriellen Betrieb befindet und die Last (108) eine leichte Last ist, die erste Elektrotechnikeinheit (101) als ein Generator arbeitet, wobei die erzeugte Elektrizität der zweiten Elektrotechnikeinheit (103) zugeführt wird, die als ein Motor arbeitet, um die Last (108) anzutreiben, und ein bestimmter Teil der Elektrizität bereitgestellt wird, um den Energiespeicherbatteriesatz (106) zu laden, sodass die Motorsatz (100) in einem Arbeitsbereich mit höherer Energieeffizienz arbeiten kann;
2) wenn die Last (108) direkt von dem Motorsatz (100) angetrieben wird, arbeitet die Elektrotechnikeinheit (101) als ein Generator, um einen bestimmten Teil ihres Stroms zu liefern, um die Energiespeicherbatterie (106) aufzuladen, sodass der Motorsatz (100) in einem Arbeitsbereich mit höherer Energieausbeute arbeiten kann;
3) der vom Generator verkörpert durch die erste Elektrotechnikeinheit (101) erzeugte Strom verwendet wird, die Energiespeicherbatterie (106) zu laden, wenn er von dem Motorsatz (100) angetrieben wird; und
4) wenn das Bremsen angewendet wird, die Energiespeicherbatterie (106) von entweder der einen oder der anderen oder von beiden der ersten Elektrotechnikeinheit (101) und der zweiten Elektrotechnikeinheit (103) aufgeladen wird, die als ein Generator arbeitet, oder eine Strom-Verbrauchslast hinzugefügt wird, um dem Bremsen eine kinetische Regenerierungsenergie-Rückführung bereitzustellen.

6. System nach Anspruch 5, bei dem die von der Energiespeicherbatterie (106) abgegebene elektrische Leistung für die folgenden Zwecke verwendet wird:
1) um eine Alternative zu der Aktivierungsbatterie (110) bereitzustellen, um die erste Elektrotechnikeinheit (101) anzutreiben, um als ein Motor zur Aktivierung des Motorsatzes (100) zu arbeiten;
2) um die zweite Elektrotechnikeinheit (103) anzutreiben, um als ein Motor zu arbeiten, um die Last (108) anzutreiben;
3) um die anderen Lasten mit Strom zu versorgen;
4) um die erste Elektrotechnikeinheit (101) oder die zweite Elektrotechnikeinheit (103) unter Verwendung des Stroms von der Energiespeicherbatterie (106) anzutreiben, um als ein Motor zu arbeiten, um den Motorsatz (100) gemeinsam darin zu unterstützen, die Last (108) anzutreiben; oder
5) um die erste Elektrotechnikeinheit (101) und die zweite Elektrotechnikeinheit (103) anzutreiben, jeweils als ein Motor zu arbeiten, um den Motorsatz (100) gemeinsam dabei zu unterstützen, die Last (108) anzutreiben.

## Revendications

1. Système d'entraînement à commande duale combinée série/parallèle comprenant :
• un ensemble moteur (100) ;
• une première unité électrique (101) de moteur fonctionnant en tant que générateur, ou qui peut être convertie afin de fonctionner en tant que moteur ou générateur ;
• une seconde unité électrique (103) de moteur fonctionnant en tant que moteur, ou qui peut être convertie afin de fonctionner en tant que moteur ou générateur, les première et seconde unités électriques étant coaxiales ;
• un embrayage (102) placé entre les première et seconde unités électriques de moteur pour transmettre ou interrompre la transmission de l'énergie cinétique de rotation ;
• une unité de commande (104) pour commander la première unité électrique de moteur afin qu'elle fonctionne en tant que générateur, ou pour commander la seconde unité électrique de moteur afin qu'elle fonctionne en tant que moteur ;
• une unité de commande centrale (105) pouvant être commandée par une interface de commande manuelle (107) pour commander le fonctionnement du système d'entraînement à commande duale combinée série/parallèle, et pour contrôler l'unité de commande (104) lorsque la seconde unité électrique de moteur fonctionne en tant que moteur, et assurer une surveillance de rétroaction et une interaction coordonnée pour toutes les unités du système ;
• une batterie d'activation (110) pour activer l'ensemble moteur ou alimenter l'équipement périphérique ;
• une charge (108) ; et
• une unité de transmission (109) prévue entre un arbre de sortie de l'ensemble moteur et un arbre d'entrée de la première unité électrique de moteur, ou entre un arbre de sortie de la première unité électrique de moteur et une entrée de l'embrayage, ou entre la sortie de l'embrayage et un arbre d'entrée de la seconde unité électrique de moteur, ou entre l'arbre de sortie de la seconde unité électrique de moteur et la charge ;
l'ensemble étant tel que, lorsque la charge est une charge lourde l'embrayage est engagé et la charge est entraînée par l'ensemble moteur ; et, lorsque la charge est une charge légère, la sortie de la seconde unité électrique de moteur fonctionnant en tant que moteur entraîne la charge.

2. Système selon la revendication 1, comportant en outre une batterie de stockage d'énergie (106), et dans lequel le dispositif est tel que la sortie de l'ensemble moteur (100) entraîne la première unité électrique (101) de moteur fonctionnant en tant que générateur pour produire de l'électricité afin de charger la batterie de stockage d'énergie (106).

3. Système selon la revendication 1 ou la revendication 2, dont les fonctions primaires comprennent :
• la sortie de l'ensemble moteur (100) entraîne la première unité électrique (101) de moteur fonctionnant en tant que générateur ;
• l'embrayage (102) est prévu entre l'arbre de sortie de la première unité électrique (101) de moteur et l'arbre d'entrée de la seconde unité électrique (103) de moteur ;
• la sortie de la seconde unité électrique (103) de moteur fonctionnant en tant que moteur entraîne la charge (108) ;
• l'embrayage (102) n'est pas engagé lorsque la charge (108) est une charge légère ;
• la sortie de l'ensemble moteur (100) à faible régime entraîne la première unité électrique (101) de moteur fonctionnant en tant que générateur pour produire de l'électricité ;
• alors l'électricité produite par le générateur constitué par la première unité électrique (101) de moteur entraîne le moteur constitué par la seconde unité électrique (103) de moteur, et entraîne en outre la charge (108) lorsque le système est un système d'entraînement en série ; et
• l'embrayage (102) est fermé dans le cas où la charge (108) est une charge lourde, et la charge (108) est entraînée par l'énergie cinétique sortante de l'ensemble moteur (100).

4. Système selon la revendication 1 ou la revendication 2, dont les fonctions secondaires comprennent :
• lorsque l'embrayage (102) n'est pas engagé, le générateur constitué par la première unité électrique (101) de moteur est converti pour fonctionner en tant que moteur, et est entraîné par l'électricité fournie par la batterie d'activation (110) pour activer l'ensemble moteur (100), et le moteur constitué par la seconde unité électrique (103) de moteur tourne dans le sens opposé pour exercer un entraînement inverse sur la charge (108) ; et
• lorsque l'embrayage (102) est engagé, la charge (108) est entraînée par l'ensemble moteur (100) pour exercer un entraînement inverse sur la charge.

5. Système selon la revendication 2, dans lequel, le dispositif est tel que :
(1) lorsque le système fonctionne en série et que la charge (108) est une charge légère, la première unité électrique (101) de moteur fonctionne en tant que générateur, l'électricité produite est fournie pour entraîner la seconde unité électrique (103) de moteur fonctionnant en tant que moteur pour entraîner la charge (108), et une certaine partie de l'électricité est fournie pour recharger la batterie de stockage d'énergie réglée (106) pour que l'ensemble moteur (100) travaille dans une zone de fonctionnement de rendement énergétique supérieur ;
(2) lorsque la charge (108) est directement entraînée par l'ensemble moteur (100), la première unité électrique (101) de moteur fonctionne en tant que générateur pour fournir une certaine partie de son électricité en recharge de la batterie de stockage d'énergie (106), pour que l'ensemble moteur (100) travaille dans une zone de fonctionnement de rendement énergétique supérieur ;
(3) l'électricité sortant du générateur constitué par la première unité électrique (101) de moteur lorsqu'entraîné par l'ensemble moteur (100) est utilisée pour recharger la batterie de stockage d'énergie (106) ; et
(4) lors de l'exercice du freinage, la batterie de stockage d'énergie (106) est rechargée par la première unité électrique (101) de moteur ou la seconde unité électrique (103) de moteur fonctionnant en tant que générateur ou les deux, ou une charge de consommation d'électricité est ajoutée pour fournir en rétroaction une énergie cinétique de régénération au freinage.

6. Système selon la revendication 5, dans lequel, la sortie d'électricité de la batterie de stockage d'énergie (106) est utilisée pour les buts suivants :
(1) fournir une alternative à la batterie d'activation (110) pour entraîner la première unité électrique (101) de moteur pour qu'elle fonctionne en tant que moteur afin d'activer l'ensemble moteur (100) ;
(2) entraîner la seconde unité électrique (103) de moteur pour qu'elle fonctionne en tant que moteur afin d'entraîner la charge (108) ;
(3) fournir de l'énergie à d'autres charges ;
(4) entraîner, en utilisant l'électricité provenant de la batterie de stockage d'énergie (106), la première unité électrique (101) de moteur ou la seconde unité électrique (103) de moteur pour qu'elle fonctionne en tant que moteur afin d'aider l'ensemble moteur (100) tout en entraînant la charge (108) ; ou
(5) entraîner, en utilisant l'électricité provenant de la batterie de stockage d'énergie (106), la première unité électrique (101) de moteur et la seconde unité électrique (103) de moteur pour qu'elles fonctionnent chacune en tant que moteur afin d'assister l'ensemble moteur (100) à entraîner la charge (108).
